# EUROPEAN PATENT SPECIFICATION

(11) **EP 1 885 163 B1**
(45) Date of publication and mention of the grant of the patent: **24.09.2008**
(21) Application number: 07252933.2
(22) Date of filing: 24.07.2007
(51) Int. Cl.: H05B 39/00, H01F 38/14

(54) **Switchable induction light**
Umschaltbare Induktionsbeleuchtung
Lumière à induction commutable

(30) Priority: 27.07.2006 GB 0614951; 12.01.2007 GB 0700670
(43) Date of publication of application: 06.02.2008
(73) Proprietor: Vernondier, David Richard, Shildon Durham DL4 2BL (GB); Clark, Richard Julian, Hook, Hampshire, RG27 8UA (GB)
(72) Inventor: Vernondier, David Richard, Shildon, Co. Durham, DL4 2BL (GB); Clark, Richard Julian, Hartley Wintney, Hants, RG27 8TW (GB)
(74) Representative: Cross, Rupert Edward Blount

(56) References cited:
- EP-A- 0 380 788
- EP-A1- 0 357 829
- WO-A-20/04097866
- FR-A3- 2 695 285
- US-A- 4 761 724
- US-A1- 2002 008 973

## Description

### Technical Field

This invention relates to an induction light that can be powered by a primary power supply or by a back-up battery in the event of a failure in the primary power supply.

### Background to the invention

FR 2 695 285 describes an induction lighting system for domestic use comprising two parts: a first part, corresponding to a wall (or ceiling) fitting, connected to a primary power supply such as the electricity mains; and a second part, corresponding to a luminaire with a light bulb. In the wall fitting, the mains supply is connected to a primary coil. The luminaire has a secondary coil that, in use, is placed next to the primary coil such that power is transferred to the light bulb by induction.

As this system does not require exposed electrical connections on either the wall fitting or the luminaire, safety is improved thereby making it better suited for providing light in a kitchen or bathroom, where extra certification requirements must be met in view of humidity.

However, should the mains supply fail, the light bulb also fails to operate. WO 03/081745 provides an improved induction lighting system, which also includes inductively-powered light modules, each of which comprises both a coil for receiving power from the mains supply and a back-up battery in case the mains supply fails. When a power output from the mains supply is available, the back-up battery may be charged.

However, this document does not address a standard consideration in domestic environments, namely that light switches are provided to switch the light source on and off. With this arrangement, somebody wishing to turn the light off would turn the switch off. This would cause disconnection from the mains supply, which will disable the inductive power supply. This is potentially advantageous, as this change is effected through the light fitting and without exposed electrical connections. However, contrary to requirement, the light will remain switched on, because disconnection of the inductive power supply will enable the alternative power output from the back-up battery in the light module.

EP-A-0380788 describes portable measurement devices which are battery powered. These can be inserted into fixed mounts. When placed therein, the battery of the measurement device is charged by inductive coupling. Data, for example measurement data, is also transferred between the measurement device and the fixed mount using an optical communication link.

### Summary of the Invention

Against this background, the present invention provides a lighting apparatus comprising: a light fitting adapted to support an associated light and having a space adapted to receive the associated light and, having an electrical output comprising a coil arranged to provide a power signal inductively to the associated light, the light fitting being arranged to present the coil for cooperating with a respective coil in the associated light; and characterised by: a switch (80) having at least two switching states corresponding to the associated light to be turned on and off; wherein the light fitting further comprises: a transmitter (170) arranged to send a further, switch signal wirelessly to the associated light, said switch signal being established in accordance with the state of the switch thereby effecting turning on and off of the associated light; and the light fitting being arranged to present the transmitter for cooperating with a respective receiver in the associated light.

The light fitting may present the coil and transmitter so as to be adjacent to the space that receives the associated light. This effects said cooperation.

The present invention also provides a light comprising: a light source; a coil arranged to receive an electrical power signal inductively and to provide electrical power to the light source; and characterised by: a back-up battery arranged to provide electrical power to the light source when the coil does not receive electrical power; a receiver operable to receive wirelessly a further, switch signal corresponding to the light to be turned on and off; a controller operable to control flow of power to the light source from the coil and the back-up battery responsive to the received switch signal; and a sealed light housing to house the light, the light housing being arranged to present the coil and the receiver for cooperating with a respective coil and respective transmitter in an associated light fitting.

The light housing may comprise a connecting portion. The connecting portion may house the coil and receiver to thereby present the coil and receiver to cooperate with the coil and transmitting in the associated light fitting. This may be effected by ensuring that the coil and receiver in the light will be proximate to the corresponding parts in the associated light when the light is presented in the light fitting. Advantageously, the connecting portion may be arranged to fit into an associated light fitting.

The controller controls whether power is supplied to the light source. Optionally, the controller may also control whether that power is provided by the coil or the back-up battery. The controller need not be complex and may be a switch.

The present invention also provides a lighting system comprising a combination of the above lighting apparatus and light.

With the above arrangements, providing electrical power to the light through a lighting fitting is performed separately to providing a switch signal through said light fitting. Accordingly, throwing the switch in the lighting apparatus will cause the light to turn on and off. This is because operating the switch causes the transmitter to send the switch signal to the light through the light fitting where it is received by the receiver. The controller then responds to the signal received by the receiver to either send power to the light source or not. This is in stark contrast to conventional lighting systems where the light switch is used directly to connect or disconnect the power supply to the light.

An advantage of the present invention is that it allows a light fitting and light that do not have exposed electrical connections. To this end, the coil of the light apparatus may be positioned behind an insulator. Likewise, the coil of the light may also be positioned behind an insulator. Preferably, the insulator covers all of the external surface of the light fitting to ensure the safety of the light fitting. A corresponding arrangement may be used on the light as well, i.e. it may be formed such that all of its exterior is insulating.

The light fitting may be attached to the ceiling or wall of a building such as a home. The fitting may then receive a light in a manner akin to placing a light bulb or a fluorescent strip light in their respective conventional light fittings. The light fitting presents the coil so as to be adjacent to the space that receives the associated light, i.e. the coil will be disposed in the light fitting to be adjacent the coil of the light when the light is fitted to the light fitting. Of course, this promotes the inductive coupling between the coils.

Similarly, the light fitting presents the transmitter so as to be adjacent to the space that receives the associated light. The connecting portion of the light housing houses the receiver, such that the receiver is adjacent the transmitter, when the light is inserted into the fitting.

The transmitter/receiver combination may take one of many forms. For example, the transmitter/receiver may operate using an electromagnetic signal such as light or infra-red, a radio signal or even an electrical or magnetic field such as in a capacitor or relay. Importantly, the transmitter/receiver should communicate via a remote link rather than a physical link as this allows electrical connections in the light fitting and light to remain internal and out of harms way.

Where an optical or infra-red link is used, the transmitter may be a light source, e.g. a LED, and the receiver may be a photodiode. The insulator separating the transmitter and receiver should then allow a useable fraction of the electromagnetic radiation to pass, preferably being substantially transparent to the electromagnetic radiation. This may be done either by using a transparent material for the insulator or by providing a window in the material.

Where an electrical field link is used, the light fitting may comprise one plate of a capacitor, and the light may comprise a corresponding plate. A dielectric may be used as for the exteriors of the light fitting and light between the plates to ensure there are no exposed electrical connections.

The switch signal may comprise two different signals, one corresponding to on and one corresponding to off, or it may comprise a signal only for one state. For example, with the switch on, the transmitter may send a switch signal to the light and, with the switch off, the transmitter may not send a switch signal to the light.

Of course, the present invention may be used with dimmer switches. In this case, the switch will have more than one state: there will be one state corresponding to off and a variable state corresponding to different power levels to be supplied to the light source to effect the required intensity of lighting. In this case, the switch signal may effect the required lighting, e.g. the switch signal may be an analog signal with a value that represents the required lighting intensity as set using the dimmer switch.

Preferably, the lighting apparatus further comprises an electrical input arranged to receive electrical power from a power source such as a main supply, and wherein the electrical output is arranged permanently to use the electrical power received to provide the power signal. In this way, electrical power is supplied to the light at all times, even when the switch is turned off. This is particularly useful as it allows the back-up battery to be kept in a state of constant readiness. The back-up battery may be recharged continually when electrical power is received by the light, or the charge of the battery may be monitored and recharged once it drops below a certain threshold.

The transmitter may be powered in different ways. For example, the transmitter may be powered from the power source that may be a main supply, or it may be powered from a battery. Where a battery is provided, it may be recharged by the power source.

Optionally, the switch may be a light switch provided on a wall or similar of a building such as a home. The switch may be provided on its own, or it may be one of a plurality of switches provided on a common switch fitting, each switch operating a different light. Indeed, there may be more than a single switch operating the light of the present invention, e.g. a landing light may be controlled independently by two switches, one positioned downstairs and one positioned upstairs. In a domestic environment, the switch may be powered by the ring mains generally routed around the walls of a home.

As will be appreciated, the light source may be powered from either the coil or the back-up battery when no power is received by the coil. Optionally, the back-up battery can provide electrical power to the light source even when the coil receives electrical power. Advantageously, the light may further comprise a switching device to manage whether the light source is powered from the coil or from the back-up battery. The switching device may comprise a first diode, biased to allow power to flow from the coil to the light source when the coil receives electrical power, and a second diode, biased to allow power to flow from the back-up battery to the light source when the coil does not receive electrical power.

The light may correspond to many of the conventional forms of lighting. For example, the light source may comprise an incandescent light bulb, a halogen bulb, or a fluorescent tube. The light source preferably comprises one or more LEDs. When the state of the switching signal causes the light source to be active, the light source may be continuously powered. Alternatively, the light source may be powered intermittently, for example according to a pulse width modulation scheme, thereby requiring less energy consumption, whilst providing adequate light output.

The light source is preferably placed in a housing. The back-up battery may be external to the housing, but is preferably also housed within the housing and preferably the housing is sealed to be watertight. A valve is optionally provided in the light. A hydrophobic valve is advantageously used to allow gas to exit from the light but to prevent water from entering the light.

Optionally, when an LED, or other cold-running light source is used, a ring may be arranged on the light housing, such that the light housing is sealable to an insulating material. Preferably the ring is an o-ring and is positioned adjacent to the secondary coil, such that when the light is fixed into the light fitting, a mechanical seal is created between the light and the insulator of the light fitting, advantageously so as to prevent water from entering the space between the light and the insulating material. This may increase the efficiency of power transfer to the light. The present invention also resides in a lighting system comprising: a light comprising a sealed light housing and a light source; a light fitting with a first connector piece arranged to support the light and provide power thereto; a light switch operable to turn the light on and off. The light fitting comprises an input connected to a power source and arranged to provide power permanently to an output comprising a primary coil, and a transmitter coupled to the switch and operable to transmit a switch signal dependent upon the switch position. The light further comprises a second connector piece having a secondary coil and a receiver, the receiver being operable to receive the switch signal; a light source connectable to the secondary coil to be powered therefrom; a back-up battery connectable to the light source to provide power thereto in the event of a failure in the power supply from the secondary coil; and a controller operable to control power delivery to the light source in response to the switch signal received by the receiver thereby to turn the light on and off. The light fitting and the light are arranged to present the primary coil and the secondary coil for inductive coupling therebetween and to present the transmitter and the receiver for wireless communication therebetween.

The light fitting and the light may be arranged such that the coil and transmitter in the light fitting and the coil and receiver in the light are positioned such that the primary coil and secondary coil may cooperate and the transmitter and receiver may cooperate. The coil in the light fitting and coil in the light in the light may be arranged to be proximate with one another, when the light is fitted into the light fitting. Also, the transmitter in the light fitting and the receiver in the light may be arranged to be proximate with one another, when the light is fitted into the light fitting.

### Brief Description of the Drawings

The invention may be put into practice in various ways, one of which will now be described by way of example only and with reference to the accompanying drawings in which:
Figure 1 shows a schematic diagram of a lighting system according to a first embodiment of the present invention;
Figure 2 shows a circuit diagram of a second embodiment of a lighting system according to the present invention; and
Figure 3 shows a circuit diagram of a third embodiment of a lighting system according to the present invention.

### Description of a Preferred Embodiments

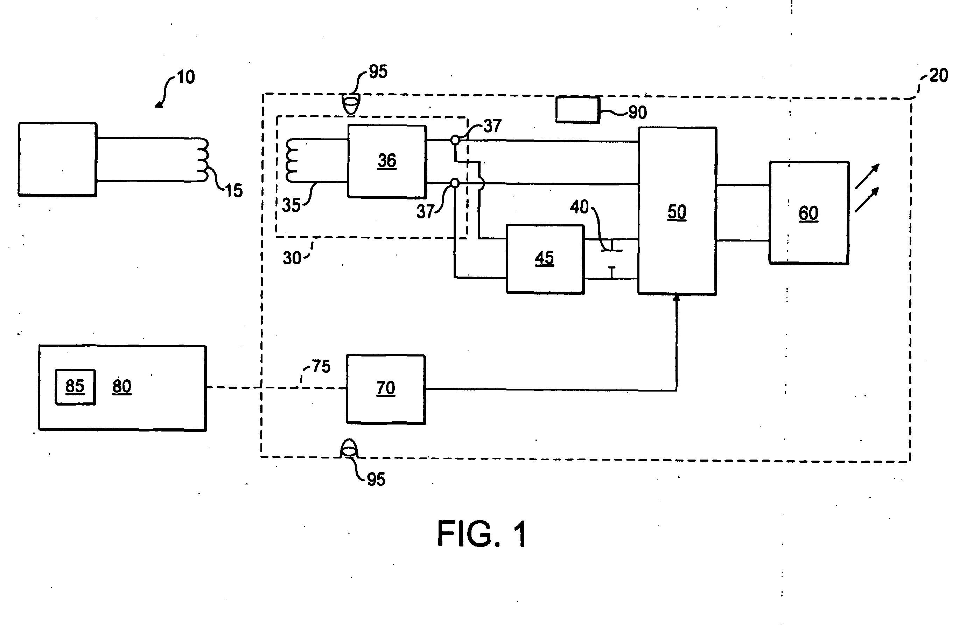

Referring first to Figure 1, a schematic diagram is shown, illustrating an embodiment of a lighting system according to the present invention. The lighting system comprises: a primary power supply 10; a light module 20; and a switching arrangement 80.

The primary power supply 10 provides power, such as from a mains supply, to the light module 20. Where the primary power supply is a mains supply, the voltage may vary depending upon the country and application of the lighting system. The primary power supply 10 provides a permanent live supply in that, barring power cuts, electricity is always available. To allow the lighting system to be switched on and off, a light switch 85 is provided in the switching arrangement 80. The switching arrangement 80 provides a switching signal 75 to the light module 20 which may be used to control whether a light source 60 of the light module 20 is on or off. The light module 20 receives power inductively from the primary power supply 10 and passes this to the light source 60 depending on the state of the switching signal 75.

The primary power supply 10 includes a primary coil 15 for inductive coupling to the light module 20. As such, the primary power supply 10 does not have any exposed electrical connections. The primary coil 15 has a toroidal winding. This primary power supply 10, via the outlet of coil 15, corresponds to a ceiling or wall fitting.

The light module 20 may correspond approximately in shape and in size to a light bulb. The light module has a housing that comprises at least one connecting portion. The at least one connecting portion is configured to fit into the associated light fitting and be supported by the light fitting. It may fasten to the coil outlet of the primary power supply 10 in standard fashion such as through a screw or bayonet light fitting. The lighting module 20 comprises a power receiving device 30; a back-up battery 40; a light source 60; and a signal receiver 70. The light module 20 receives power from the coil 15 of the primary power supply 10 through the power receiving device 30, and uses this to power light source 60. The back-up battery 40 provides an alternative power source when power from the primary power supply 10 is unavailable. The signal receiver 70 receives from the switching apparatus 80, the switching signal 75 which is used to control the light source. The signal receiver 70 is positioned in the connecting portion of the light housing, such that there is close coupling between it and the switching apparatus 80, but such that the switching signal 75 is received without exposed electrical connections between the light module 20 and switching arrangement 80.

The power receiving device 30 comprises a secondary coil 35. The secondary coil 35 is located in a connecting portion of the light housing and is positioned such that, when the light module 20 is fitted to the primary power supply 10, the secondary coil 35 is close to the primary coil 15 such that a voltage is induced across the secondary coil 35. The secondary coil 35 also has a toroidal winding, with a ring diameter such that the secondary coil 35 may fit within the primary coil 15 when the light module 20 is placed in the ceiling or wall fitting. In this embodiment, the power receiving device 30 comprises a power controller for converting the power received by the secondary coil 35 into the power output 37. A power controller 36 is also provided which couples the power input from the secondary coil 35 to the power output 37.

The back-up battery 40 of the light module 20 may be coupled to the power output 37 of the power receiving device 30. In this way, the back-up battery 40 may be charged by the power output 37. Optionally, a battery charge controller 45 is provided for controlling the power used for charging the battery 40.

In this embodiment, the light module 20 comprises a light controller 50 for controlling the light source 60 depending on the switching signal 75. The light controller 50 may be coupled to the power output 37 and to the back-up battery 40. In this way, the light controller may power the light source 60 using the power output 37 or using the output of the back-up battery 40.

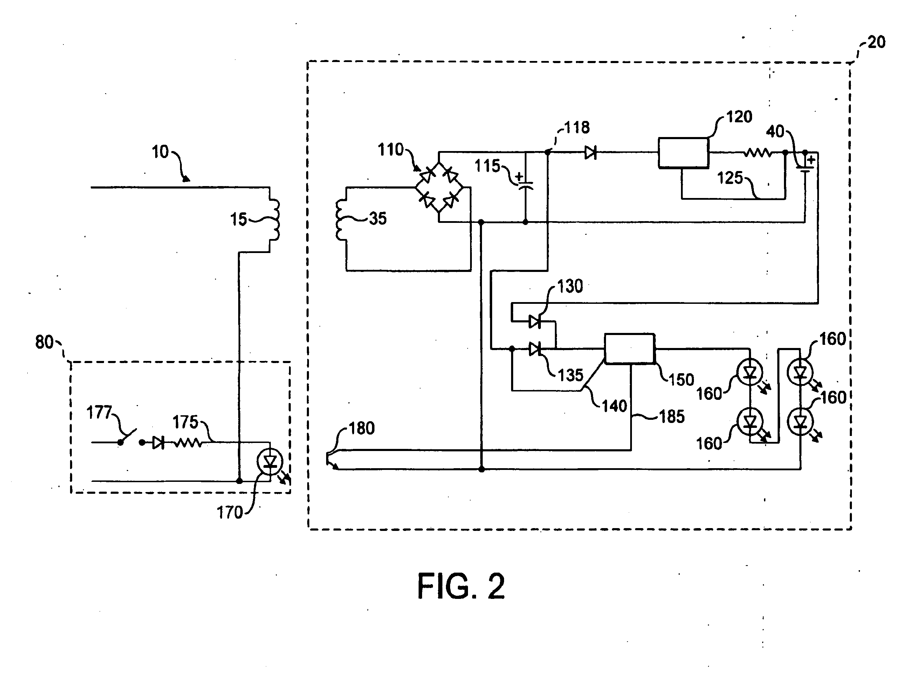

Referring now to Figure 2, a circuit diagram of a second embodiment of the present invention is shown that generally accords with the embodiment of Figure 1. As before, the lighting system comprises a power supply 10 supplying electricity to a primary coil 15. The primary power supply 10 comprises a ceiling or wall fitting.

The switching arrangement 80 is powered by the mains supply 10 and shares a common ground with the primary coil 15. Part of the switching arrangement, in particular switch 177, may be fixed in a separate wall fitting to the coil outlet. The switch 177 is connected to LED 170 through a switched line 175. The switch 177 therefore controls when LED 170 is illuminated and generates light.

The lighting system also comprises a light module 20, including a secondary coil 35, arranged to receive ac power from the primary coil 15. The primary coil 15 is preferably implemented as part of a holding device such as a wall fitting or ceiling fitting, which is adapted to receive the light module 20, such that secondary coil 35 is positioned proximate to the primary coil 15. The light module 20 is preferably embodied as a sealed lamp using a light housing, such that water may not enter the lamp. The lamp is therefore waterproof. The secondary coil 35 is coupled to as an input to a rectifier circuit 110, the output of which is connected to a smoothing capacitor 115.

The smoothing capacitor's power output 118 is coupled to a battery charge controller 120. The battery charge controller 120 is coupled to a back-up battery 40 and also receives as an input a sensing signal 125, for controlling the charging current provided to the back-up battery 40.

The smoothing capacitor's power output 118 is coupled to a current controller 150, firstly via a diode 135 (hereinafter referred to as the capacitor diode 135) and secondly via a sensing line 140. The back-up battery power output is also coupled to the current controller 150, via a diode 130 (hereinafter referred to as the battery diode 130).

The current controller 150 regulates the power input to provide a power output which is provided to LEDs 160. The expected lifetime of the LEDs 160 is greater than that of the back-up battery. When provided with the power output from the current controller 150, the LEDs 160 emit light.

The light module also comprises a photodiode 180 that interfaces with the switching arrangement 80. The photodiode 180 generates a switching signal 185 based on the received light level from LED 170. The switching signal 185 is provided to the current controller 150.

The lighting system may be also used in environments with large quantities of water, for instance in a shower cubicle, or a swimming pool. The lamp unit is hermetically sealed to be waterproof and also to withstand the pressure requirements of the environment in which it will be used.

As the light sources, comprising LEDs, are cold-running, the temperature of the light unit is maintained at a low level. The light module 20 comprises an o-ring 95, positioned on the exterior of the housing of light module 20. The o-ring 95 is used to create a seal between the housing of light module 20 and the primary power supply 10, so as to seal the space between the light module and the ceiling or wall fitting, and to keep this space watertight. This improves the induction between the primary coil 15 and the secondary coil 35. Conventional light bulbs are unable to utilise an o-ring in this sealing application, as the o-ring is unable to withstand the high temperatures that other light sources may cause.

The battery is housed within the sealed lamp. Then, battery management is an important consideration. Over time, the back-up battery may emit gasses. These gasses should be removed from the light. A valve 90 is provided to allow the emission of gasses from the light. Valve 90 is hydrophobic such that gasses from within the light are allowed to exit through the valve, but water from outside the sealed light is prevented from entering the light. In this way, the light is able to withstand the required environmental pressure and maintain its waterproofing.

Hence, the lighting system of Figure 2 may operate in the following way. Under normal circumstances when the mains power supply is working and available, power is supplied to primary coil 15, which causes a voltage to be induced across secondary coil 35, thereby providing an induced power source. The induced power is provided to the rectifier circuit 110 and smoothing capacitor 115, which produces a dc power output 118. This dc power output 118 is provided to battery charge controller 120 thereby charging back-up battery 40.

The dc power output 118 is also provided to current controller 150, which senses that the dc power output is non-zero using sense line 140. The voltage at the dc power output 118 is greater than the voltage across back-up battery 40. Hence the capacitor diode 135 is forward biased such that current flows from the dc power output 118 through the capacitor diode 135 and into the current controller 150. At the same time, the battery diode 130 is thereby reverse biased and so no current is drawn from the back-up battery 40. Hence, the current controller arranges itself to provide an output using only the dc power output 118.

Hence, when the mains power supply is available, the light module 20 may be advantageously controlled in the following way. When switch 177 is on, LED 170 is enabled and photodiode 180 generates a switching signal 185 that is a positive current, which is coupled to the current controller 150. The current controller, in response to the positive switching signal provides a power output using the dc power output 118 to the LEDs 160, causing them to light.

When switch 177 is turned off, LED 170 is also turned off and so photodiode 180 causes a switching signal 185 that has zero current, which is sensed by the current controller 150. The current controller 150, in response to the zero switching signal does not provide a power output to the LEDs 160, causing them to not light.

However, under a different circumstance, when the mains power supply 10 fails, no voltage is induced across secondary coil 35 and the smoothing capacitor's power output 118 provides zero power. The voltage across the back-up battery 40 is greater than the voltage at the dc power output 118. Hence the capacitor diode 135 is reverse biased and the battery diode 130 is forward biased such that current flows from the back-up battery 40 through the battery diode 130 and the back-up battery 40 provides power to the current controller 150. The current controller 150 also senses that the smoothing capacitor's power output is zero using sense line 140. Hence, the current controller arranges itself to provide an output using the output from back-up battery 40.

By removing the light module 20 from the primary power supply 10, in other words taking the light module 20 out of the wall or ceiling fitting, the light module 20 may be powered using back-up battery 40 and may advantageously be used as a portable torch. Nevertheless, in such a case the signal receiver 70 will not receive the switching signal 75 and the light will remain on.

In this embodiment, the current controller 150 does not respond to the switching signal 75 when it senses that smoothing capacitor's power output 118 is zero.

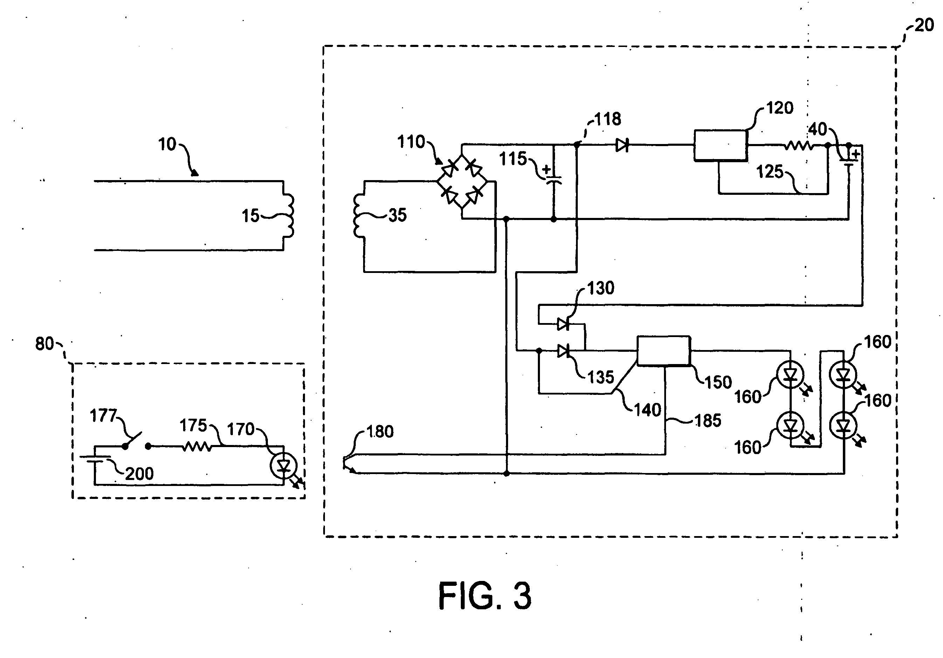

Referring now to Figure 3, a circuit diagram of a third embodiment of a lighting system according to the present invention is shown. The lighting system comprises: a primary power supply 10 coupled to a primary coil 15; a light module 20; and a switching arrangement 80.

The light module 20 is the same as that shown in Figure 2. However, in Figure 3, the switching arrangement 80 differs and comprises a battery 200; a switch 177; and an LED 170. The LED 170 is controlled by the switch 177 that is coupled to battery 200. Advantageously, the switch 177 controls when power is provided to LED 170. This embodiment allows for a more portable switching arrangement which need not be fixed to a wall although it may be fixed in place if desired.

Although preferred embodiments have been described above, the skilled person will realise that variations may be made without departing from the scope of the present invention.

Optionally, the sealed light may be partially or fully evacuated to prevent condensation within the sealed light due to the materials or due to trapped vapour, when a temperature differential exists between the interior and exterior of the light.

Although an optical transmitter and receiver have been used to convey and receive the switching signal respectively, the transmitter and receiver may instead use other arrangements such as electromagnetic signals for instance a radio signal, an infrared signal, an electrical signal which may be capacitively coupled, or a magnetic signal, for instance using a magnetic relay, where the transmitter would comprise an electromagnet. Signalling should be effected at a distance such that no live exposed electrical connections are used and any safety requirements due to humidity are met.

Although the primary coil and secondary coil of the preferred embodiment have toroidal windings, the skilled person will understand that other shapes may be alternatively used and that the secondary coil need not fit within the primary coil. The skilled person will appreciate that the power controller 36 may include other power controlling circuits, for instance, a regulator for regulating the power output 37.

The skilled person will understand that the current controller 150 may be responsive to the switching signal 75 even when the current controller 150 senses that no power output is received from the smoothing capacitor 115 because of a total mains failure, i.e. in the event of a mains failure the light will be powered by the back-up battery 40 but may still be switched on and off. Alternatively, a second switching signal may be provided that may be used to switch the light on and off in the event of a mains failure.

Optionally, the skilled person will appreciate that the o-ring 95 may be attached to the exterior of the insulating material of the primary power supply 10, rather than to the exterior of the housing of the light module 20. The o-ring should thereby seal the space between the insulator housing for the primary power supply 10 and the light housing. Although an o-ring is described, the skilled person will understand that other shapes of ring are possible, such that the desired seal may be provided in an alternative way. The skilled person will also appreciate that the location of the o-ring may be varied to provide the seal.

In the above embodiments, the switching signal 75 has been shown as a digital signal, being either positive or negative. However, the skilled person will understand that an analogue signal may alternatively be used, and that other digital signals may be used, for instance a pulse coded modulation signal, a line-coded binary signal or other known signalling means.

The switch may be mounted on a wall or may be a remote control, particularly if connected to an optical or radio transmitter for sending the switching signal to the light module 20. Nevertheless, if the switch is a remote control, the transmitter for communicating the switching signal to the light is housed within the light fitting. The switch 177 has been described as a simple on/off device, although the skilled person will recognise that a dimmer switch may also be used with an appropriately adapted switching signal.

The light source 60 may comprise a device other than an LED, for instance, other semiconductor lighting devices, light bulbs of all types or fluorescent tubes.

The light module 20 is described above as a sealed lamp and the primary coil 15 is described as being embodied in a holder. Alternatively, the primary coil 15 and light module 20 may be fixed in place.

Although the embodiments of a light described herein only use the back-up battery 40 when the inductive power source is not available, the skilled person will understand that power can be drawn from the back-up battery 40 even when the inductive power source is available. In such a case, the inductive power source can be used to charge the battery, as the battery is being used.

## Claims

1. Lighting apparatus comprising:
a light fitting adapted to support an associated light (20) and having a space adapted to receive the associated light and, having an electrical output comprising a coil (15) arranged to provide a power signal inductively to the associated light, the light fitting being arranged to present the coil for cooperating with a respective coil in the associated light; and
**characterised by**:
a switch (80) having at least two switching states corresponding to the associated light to be turned on and off;
wherein the light fitting further comprises:
a transmitter (170) arranged to send a further, switch signal wirelessly to the associated light, said switch signal being established in accordance with the state of the switch thereby effecting turning on and off of the associated light; and
the light fitting being arranged to present the transmitter for cooperating with a respective receiver in the associated light.

2. The lighting apparatus of claim 1, wherein the light fitting is arranged to position the coil (15) and the transmitter (170) adjacent to the space adapted to receive the associated light.

3. The lighting apparatus of claim 1 or claim 2, wherein the lighting apparatus further comprises:
an electrical input (10) arranged to receive electrical power from a power source; and
wherein the electrical output is arranged permanently to use the electrical power received to provide the power signal.

4. The lighting apparatus of claim 3, wherein the lighting apparatus further comprises:
a battery (200), arranged to provide electrical power to the transmitter.

5. The lighting apparatus of claim 3, wherein the transmitter (170) is arranged to receive electrical power from the power source.

6. The lighting apparatus of any preceding claim, wherein the light fitting comprises:
insulating material separating the coil from the space.

7. The lighting apparatus of claim 5, wherein all of the light fitting's exterior surface is electrically insulated from the coil and the transmitter.

8. The lighting apparatus of claim 6 or claim 7, wherein the transmitter (170) comprises a source of electromagnetic radiation and wherein the light fitting comprises:
insulating material separating the coil and the transmitter from the space, and wherein at least a portion of the insulating material adjacent the transmitter is substantially transparent to the electromagnetic radiation.

9. The lighting apparatus of claim 8, wherein the transmitter (170) comprises a source of infra-red radiation or a light source.

10. The lighting apparatus of claim 9, wherein the transmitter (170) is an LED.

11. The lighting apparatus of any preceding claim, wherein the switch (80) has at least three switching states corresponding to the associated light being turned fully on, partially on, and off, and the transmitter (170) is arranged to send the switch signal in accordance with the state of the switch thereby effecting turning the light source fully on, partially on and off.

12. A light (20) comprising:
a light source (60);
a coil (35) arranged to receive an electrical power signal inductively and to provide electrical power to the light source; and
**characterised by**:
a back-up battery (40) arranged to provide electrical power to the light source when the coil does not receive electrical power;
a receiver (70) operable to receive wirelessly a further, switch signal corresponding to the light to be turned on and off;
a controller (50) operable to control flow of power to the light source from the coil and the back-up battery responsive to the received switch signal; and
a sealed light housing to house the light, the light housing being arranged to present the coil and the receiver for cooperating with a respective coil and respective transmitter in an associated light fitting.

13. A light according to claim 12, wherein the sealed light housing comprises a connecting portion, the connecting portion housing the coil and receiver and comprising an insulating material.

14. A light according to claim 13, wherein all of the light housing's exterior surface is electrically insulated from the coil and the receiver.

15. A light according to any of claims 12 to 14, wherein the receiver (70) is arranged to respond to received electromagnetic radiation.

16. A light according to claim 15, when dependent on claim 13 or claim 14, wherein at least a portion of the insulating material adjacent the receiver is substantially transparent to electromagnetic radiation.

17. A light according to claim 16, wherein the receiver comprises a photodiode (180).

18. A light according to any of claims 12 to 17, wherein the switch signal has two states and the controller (50) is arranged to provide no power to the light source in response to the switch signal having a first state and to provide power to the light source in response to the switch signal having a second state.

19. A light according to claim 18, wherein the switch signal has three states and the controller (50) is arranged to provide a first power level to the light source in response to the received switch signal having a second state and to provide a second power level to the light source in response to the received switch signal having a third state.

20. A light according to any of claims 12 to 19, wherein the light source comprises an LED (160).

21. A light according to any of claims 12 to 20, further comprising:
a battery charger (45), arranged to provide power from the coil to the back-up battery (40), thereby to charge the back-up battery.

22. A light according to any of claims 12 to 21, wherein the back-up battery (40) is further arranged to provide electrical power to the light source when the coil receives electrical power.

23. A light according to any of claims 12 to 21, further comprising:
a routing device, arranged to power the light source from the coil when the coil receives electrical power and to power the light source from the back-up battery when the coil does not receive electrical power.

24. A light according to claim 23, wherein the switching device comprises:
a first diode (135), biased to allow power to flow from the coil to the light source when the coil receives electrical power; and
a second diode (130), biased to allow power to flow from the back-up battery to the light source when the coil does not receive electrical power.

25. A light according to any of claims 12 to 24 wherein the light housing forms a sealed, watertight unit.

26. A light according to claim 25, further comprising:
a ring, arranged on the light housing, such that the light housing is sealable to an insulating material.

27. A light according to claim 25 or claim 26 further comprising:
a valve (95), arranged to allow gas to exit the light housing and to prevent water from entering the light housing.

28. A lighting system comprising: a lighting apparatus according to any of claims 1 to 11 and a light according to any of claims 12 to 27.

29. A lighting system comprising:
a light (20) comprising a sealed light housing and a light source (60);
a light fitting with a first connector piece arranged to support the light and provide power thereto;
a light switch (80) operable to turn the light on and off;
the light fitting comprising an input (10) connected to a power source and arranged to provide power permanently to an output comprising a primary coil (15), and a transmitter (170) coupled to the switch and operable to transmit a switch signal dependent upon the switch position;
the light further comprising a second connector piece having a secondary coil (35) and a receiver (70), the receiver being operable to receive the switch signal; a light source (60) connectable to the secondary coil to be powered therefrom; a back-up battery (40) connectable to the light source to provide power thereto in the event of a failure in the power supply from the secondary coil; and a controller (50) operable to control power delivery to the light source in response to the switch signal received by the receiver thereby to turn the light on and off;
wherein the light fitting and the light are arranged to present the primary coil and the secondary coil for inductive coupling therebetween and to present the transmitter and the receiver for wireless communication therebetween.

## Patentansprüche

1. Beleuchtungsvorrichtung, umfassend:
eine Leuchtenhalterung, die dafür ausgelegt ist, eine zugehörige Leuchte (20) zu unterstützen, und einen Raum aufweist, der dafür ausgelegt ist, die zugehörige Leuchte aufzunehmen, und einen elektrischen Ausgang aufweist, der eine Spule (15) umfasst, die dafür ausgelegt ist, ein Leistungssignal der zugehörigen Leuchte induktiv bereitzustellen, wobei die Leuchtenhalterung so ausgeführt ist, dass sie die Spule für eine Kooperation mit einer entsprechenden Spule in der zugehörigen Leuchte bereitstellt; und
**gekennzeichnet durch**:
einen Schalter (80), der wenigstens zwei Schaltzustände aufweist, die einer eingeschalteten und einer ausgeschalteten zugehörigen Leuchte entsprechen;
wobei die Leuchtenhalterung ferner umfasst:
einen Sender (170), der so ausgeführt ist, dass er ein weiteres Schaltsignal drahtlos zu der zugehörigen Leuchte zu senden, wobei das Schaltsignal entsprechend dem Zustand des Schalters festgelegt wird, um somit das Einschalten und Ausschalten der zugehörigen Leuchte zu bewirken; und wobei
die Leuchtenhalterung so ausgeführt ist, dass sie den Sender für eine Kooperation mit einem entsprechenden Empfänger in der zugehörigen Leuchte bereitstellt.

2. Beleuchtungsvorrichtung nach Anspruch 1, wobei die Leuchtenhalterung so ausgeführt ist, dass die Spule (15) und der Sender (170) neben dem Raum angeordnet sind, der dafür ausgelegt ist, die zugehörige Leuchte aufzunehmen.

3. Beleuchtungsvorrichtung nach Anspruch 1 oder Anspruch 2, wobei die Beleuchtungsvorrichtung ferner umfasst:
einen elektrischen Eingang (10), der so ausgeführt ist, dass er elektrische Leistung von einer Leistungsquelle empfängt; und
wobei der elektrische Ausgang so ausgeführt ist, dass er dauerhaft die empfangene elektrische Leistung nutzt, um das Leistungssignal bereitzustellen.

4. Beleuchtungsvorrichtung nach Anspruch 3, wobei die Beleuchtungsvorrichtung ferner umfasst:
eine Batterie (200), die so ausgeführt ist, dass sie dem Sender elektrische Leistung bereitstellt.

5. Beleuchtungsvorrichtung nach Anspruch 3, wobei der Sender (170) so ausgeführt ist, dass er elektrische Leistung von der Leistungsquelle empfängt.

6. Beleuchtungsvorrichtung nach irgendeinem der vorangehenden Ansprüche, wobei die Leuchtenhalterung umfasst:
Isolationsmaterial, das die Spule von dem Raum trennt.

7. Beleuchtungsvorrichtung nach Anspruch 5, wobei die gesamte Außenoberfläche der Leuchtenhalterung von der Spule und dem Sender elektrisch isoliert ist.

8. Beleuchtungsvorrichtung nach Anspruch 6 oder Anspruch 7, wobei der Sender (170) eine Quelle elektromagnetischer Strahlung umfasst, und wobei die Leuchtenhalterung umfasst:
Isolationsmaterial, das die Spule und den Sender von dem Raum trennt, wobei wenigstens ein Teil des Isolationsmaterials neben dem Sender für elektromagnetische Strahlung im Wesentlichen transparent ist.

9. Beleuchtungsvorrichtung nach Anspruch 8, wobei der Sender (170) eine Quelle von Infrarotstrahlung oder eine Lichtquelle umfasst.

10. Beleuchtungsvorrichtung nach Anspruch 9, wobei der Sender (170) eine LED ist.

11. Beleuchtungsvorrichtung nach irgendeinem der vorangehenden Ansprüche, wobei der Schalter (80) wenigstens drei Schaltzustände aufweist, die einer vollständig eingeschalteten, einer teilweise eingeschalteten und einer abgeschalteten zugehörigen Leuchte entsprechen, wobei der Sender (170) so ausgeführt ist, dass er das Schaltsignal entsprechend dem Zustand des Schalters sendet, um somit ein vollständiges Einschalten, ein teilweises Einschalten und ein Ausschalten der Lichtquelle zu bewirken.

12. Leuchte (20), umfassend:
eine Lichtquelle (60);
eine Spule (35), die so ausgeführt ist, dass sie ein elektrisches Leistungssignal induktiv empfängt und elektrische Leistung der Lichtquelle bereitstellt; und
**gekennzeichnet durch**:
eine Pufferbatterie (40), die so beschaffen ist, dass sie der Lichtquelle elektrische Leistung bereitstellt, wenn die Spule keine elektrische Leistung empfängt;
einen Empfänger (70), der so betreibbar ist, dass er drahtlos ein weiteres Schaltsignal empfängt, das einer einzuschaltenden oder auszuschaltenden Leuchte entspricht;
eine Steuervorrichtung (50), die so betreibbar ist, dass sie den Leistungsfluss zu der Lichtquelle von der Spule und der Pufferbatterie in Reaktion auf das empfangene Schaltsignal steuert; und
ein gekapseltes Leuchtengehäuse zum Aufnehmen der Leuchte, wobei das Leuchtengehäuse so ausgeführt ist, dass es die Spule und den Empfänger für eine Kooperation mit einer entsprechenden Spule und einem entsprechenden Sender in einer zugehörigen Leuchtenhalterung bereitstellt.

13. Leuchte nach Anspruch 12, wobei das gekapselte Leuchtengehäuse einen Verbindungsabschnitt umfasst, der die Spule und den Empfänger aufnimmt und ein Isolationsmaterial umfasst.

14. Leuchte nach Anspruch 13, wobei die gesamte Außenoberfläche des Leuchtengehäuses von der Spule und dem Empfänger elektrisch isoliert ist.

15. Leuchte nach irgendeinem der Ansprüche 12 bis 14, wobei der Empfänger (70) so ausgeführt ist, dass er auf empfangene elektromagnetische Strahlung anspricht.

16. Leuchte nach Anspruch 15, in Abhängigkeit von Anspruch 13 oder Anspruch 14, wobei wenigstens ein Teil des Isolationsmaterials neben dem Empfänger für elektromagnetische Strahlung im Wesentlichen transparent ist.

17. Leuchte nach Anspruch 16, wobei der Empfänger eine Photodiode (180) umfasst.

18. Leuchte nach irgendeinem der Ansprüche 12 bis 17, wobei ein Schaltsignal zwei Zustände aufweist und die Steuervorrichtung (50) so ausgeführt ist, dass sie der Lichtquelle in Reaktion auf ein Schaltsignal, das einen ersten Zustand aufweist, keine Leistung bereitstellt, und der Lichtquelle in Reaktion auf ein Schaltsignal, das einen zweiten Zustand aufweist, Leistung bereitstellt.

19. Leuchte nach Anspruch 18, wobei das Schaltsignal drei Zustände aufweist und die Steuervorrichtung (50) so ausgeführt ist, dass sie der Lichtquelle in Reaktion auf ein empfangenes Schaltsignal, das einen zweiten Zustand aufweist, einen ersten Leistungspegel bereitstellt, und der Lichtquelle in Reaktion auf ein empfangenes Schaltsignal, das einen dritten Zustand aufweist, einen zweiten Leistungspegel bereitstellt.

20. Leuchte nach irgendeinem der Ansprüche 12 bis 19, wobei die Lichtquelle eine LED (160) umfasst.

21. Leuchte nach irgendeinem der Ansprüche 12 bis 20, ferner umfassend:
eine Batterieladevorrichtung (45), die so ausgeführt ist, dass sie der Pufferbatterie (40) Leistung von der Spule bereitstellt, um somit die Pufferbatterie zu laden.

22. Leuchte nach irgendeinem der Ansprüche 12 bis 21, wobei die Pufferbatterie (40) ferner so ausgeführt ist, dass sie der Lichtquelle elektrische Leistung bereitstellt, wenn die Spule elektrische Leistung empfängt.

23. Leuchte nach irgendeinem der Ansprüche 12 bis 21, ferner umfassend:
eine Leitvorrichtung, die so ausgeführt ist, dass sie die Lichtquelle mittels der Spule mit Leistung versorgt, wenn die Spule elektrische Leistung empfängt, und die Lichtquelle mittels der Pufferbatterie mit Leistung versorgt, wenn die Spule keine elektrische Leistung empfängt.

24. Leuchte nach Anspruch 23, wobei die Schaltvorrichtung umfasst:
eine erste Diode (135), die vorgespannt ist, um zu erlauben, dass Leistung von der Spule zu der Lichtquelle fließt, wenn die Spule elektrische Leistung empfängt; und
eine zweite Diode (130), die vorgespannt ist, um zu erlauben, dass Leistung von der Pufferbatterie zu der Lichtquelle fließt, wenn die Spule keine elektrische Leistung empfängt.

25. Leuchte nach irgendeinem der Ansprüche 12 bis 24, wobei das Leuchtengehäuse eine gekapselte, wasserdichte Einheit bildet.

26. Leuchte nach Anspruch 25, ferner umfassend:
eine Ring, der auf dem Leuchtengehäuse angeordnet ist, so dass das Leuchtengehäuse an einem Isolationsmaterial abdichtbar ist.

27. Leuchte nach Anspruch 25 oder Anspruch 26, ferner umfassend:
ein Ventil (95), das so ausgeführt ist, dass es Gas erlaubt, aus dem Leuchtengehäuse auszutreten, und Wasser daran hindert, in das Leuchtengehäuse einzudringen.

28. Beleuchtungssystem, umfassend:
eine Beleuchtungsvorrichtung nach irgendeinem der Ansprüche 1 bis 11 und eine Leuchte nach irgendeinem der Ansprüche 12 bis 27.

29. Beleuchtungssystem, umfassend:
eine Leuchte (20), die ein gekapseltes Leuchtengehäuse und eine Lichtquelle (60) umfasst;
eine Leuchtenhalterung mit einem ersten Verbinderstück, das so ausgeführt ist, dass es die Leuchte unterstützt und dieser Leistung zuführt;
einen Leuchtenschalter (80), der betätigt werden kann, um die Leuchte ein- und auszuschalten;
wobei die Leuchtenhalterung einen Eingang (10) umfasst, der mit einer Leistungsquelle verbunden ist und so ausgeführt ist, dass er einem Ausgang, der eine Primärspule (15) umfasst, dauerhaft Leistung bereitstellt, und einen Sender (170) umfasst, der mit dem Schalter gekoppelt ist und so betreibbar ist, dass er in Abhängigkeit von der Schaltstellung ein Schaltsignal sendet;
wobei die Leuchte ferner umfasst: ein zweites Verbinderstück mit einer Sekundärspule (35) und einem Empfänger (70), wobei der Empfänger so betreibbar ist, dass er das Schaltsignal empfängt; eine Lichtquelle (60), die mit der Sekundärspule verbindbar ist, um von dieser mit Leistung versorgt zu werden; eine Pufferbatterie (40), die mit der Lichtquelle verbindbar ist, um dieser im Fall eines Ausfalls der Leistungsversorgung von der Sekundärspule Leistung bereitzustellen; und eine Steuervorrichtung (50), die betreibbar ist, dass sie die Leistungszufuhr zur Lichtquelle in Reaktion auf das vom Empfänger empfangene Schaltsignal steuert, um somit das Licht ein- und auszuschalten;
wobei die Leuchtenhalterung und die Leuchte so ausgeführt sind, dass sie die Primärspule und die Sekundärspule für eine induktive Kopplung zwischen diesen bereitstellen und den Sender und den Empfänger für eine drahtlose Kommunikation zwischen diesen bereitstellen.

## Revendications

1. Dispositif d'éclairage comprenant :
un élément de fixation de voyant conçu pour supporter un voyant associé (20) et présentant un espace adapté pour recevoir le voyant associé et ayant une sortie électrique comprenant une bobine (15) agencée pour fournir un signal d'alimentation de manière inductive au voyant associé, l'élément de fixation de voyant étant agencé pour présenter la bobine afin qu'elle coopère avec une bobine respective dans le voyant associé, et
**caractérisé par** :
un commutateur (80) ayant au moins deux états de commutation correspondant au voyant associé à allumer et à éteindre,
où l'élément de fixation de voyant comprend en outre :
un émetteur (170) agencé pour envoyer un autre signal de commutation de manière sans fil au voyant associé, ledit signal de commutation étant établi conformément à l'état du commutateur en effectuant ainsi l'allumage et l'extinction du voyant associé, et
l'élément de fixation de voyant étant agencé pour présenter l'émetteur afin qu'il coopère avec un récepteur respectif dans le voyant associé.

2. Dispositif d'éclairage selon la revendication 1, dans lequel l'élément de fixation de voyant est agencé pour positionner la bobine (15) et l'émetteur (170) de manière adjacente à l'espace adapté pour recevoir le voyant associé.

3. Dispositif d'éclairage selon la revendication 1 ou 2, où le dispositif d'éclairage comprend en outre :
une entrée électrique (10) agencée pour recevoir une alimentation électrique d'une source d'alimentation, et
dans lequel la sortie électrique est agencée en permanence pour utiliser l'alimentation électrique reçue afin de fournir le signal d'alimentation.

4. Dispositif d'éclairage selon la revendication 3, où le dispositif d'éclairage comprend en outre :
une batterie (200) agencée pour fournir une alimentation électrique à l'émetteur.

5. Dispositif d'éclairage selon la revendication 3, dans lequel l'émetteur (170) est agencé pour recevoir une alimentation électrique de la source d'alimentation.

6. Dispositif d'éclairage selon l'une quelconque des revendications précédentes, dans lequel l'élément de fixation de voyant comprend :
un matériau isolant séparant la bobine de l'espace.

7. Dispositif d'éclairage selon la revendication 5, dans lequel la totalité de la surface extérieure de l'élément de fixation de voyant est électriquement isolée de la bobine et de l'émetteur.

8. Dispositif d'éclairage selon la revendication 6 ou la revendication 7, dans lequel l'émetteur (170) comprend une source de rayonnement électromagnétique et dans lequel l'élément de fixation de voyant comprend :
un matériau isolant séparant la bobine et l'émetteur de l'espace, et dans lequel une partie du matériau isolant adjacente à l'émetteur est pratiquement transparente au rayonnement électromagnétique.

9. Dispositif d'éclairage selon la revendication 8, dans lequel l'émetteur (170) comprend une source de rayonnement infrarouge ou une source de lumière.

10. Dispositif d'éclairage selon la revendication 9, dans lequel l'émetteur (170) est une diode électroluminescente (LED).

11. Dispositif d'éclairage selon l'une quelconque des revendications précédentes, dans lequel le commutateur (80) a au moins trois états de commutation correspondant au fait que le voyant associé est complètement allumé, partiellement allumé et éteint et l'émetteur (170) est agencé pour envoyer le signal de commutation conformément à l'état du commutateur en effectuant ainsi l'allumage complet, l'allumage partiel et l'extinction de la source de lumière.

12. Voyant (20) comprenant :
une source de lumière (60),
une bobine (35) agencée pour recevoir un signal d'alimentation électrique de manière inductive et pour fournir une alimentation électrique à la source de lumière, et
**caractérisé par** :
une batterie de secours (40) agencée pour fournir une alimentation électrique à la source de lumière lorsque la bobine ne reçoit pas d'alimentation électrique,
un récepteur (70) pouvant être mis en oeuvre pour recevoir de manière sans fil un autre signal de commutation correspondant au fait que le voyant doit être allumé et éteint,
un contrôleur (50) pouvant être mis en oeuvre pour commander la circulation de courant vers la source de lumière depuis la bobine et la batterie de secours en réponse au signal de commutation reçu, et
un boîtier de voyant scellé pour loger le voyant, le boîtier de voyant étant agencé pour présenter la bobine et le récepteur afin qu'ils coopèrent avec une bobine respective et un émetteur respectif dans un élément de fixation de voyant associé.

13. Voyant selon la revendication 12, dans lequel le boîtier de voyant scellé comprend une partie de connexion, la partie de connexion logeant la bobine et le récepteur et comprenant un matériau isolant.

14. Voyant selon la revendication 13, dans lequel la totalité de la surface extérieure du boîtier de voyant est électriquement isolée de la bobine et du récepteur.

15. Voyant selon l'une quelconque des revendications 12 à 14, dans lequel le récepteur (70) est agencé pour répondre à un rayonnement électromagnétique reçu.

16. Voyant selon la revendication 15, lorsqu'elle dépend de la revendication 13 ou de la revendication 14, dans lequel au moins une partie du matériau isolant adjacent au récepteur est pratiquement transparente au rayonnement électromagnétique.

17. Voyant selon la revendication 16, dans lequel le récepteur comprend une photodiode (180).

18. Voyant selon l'une quelconque des revendications 12 à 17, dans lequel le signal de commutation a deux états et le contrôleur (50) est agencé pour ne fournir aucune alimentation à la source de lumière en réponse au fait que le signal de commutation a un premier état et pour fournir une alimentation à la source de lumière en réponse au fait que le signal de commutation a un deuxième état.

19. Voyant selon la revendication 18, dans lequel le signal de commutation a trois états et le contrôleur (50) est agencé pour fournir un premier niveau d'alimentation à la source de lumière en réponse au fait que le signal de commutation reçu a un deuxième état et pour fournir un deuxième niveau d'alimentation à la source de lumière en réponse au fait que le signal de commutation reçu a un troisième état.

20. Voyant selon l'une quelconque des revendications 12 à 19, dans lequel la source de lumière comprend une diode LED (160).

21. Voyant selon l'une quelconque des revendications 12 à 20, comprenant en outre :
un chargeur de batterie (45) agencé pour fournir une alimentation de la bobine à la batterie de secours (40), afin de charger ainsi la batterie de secours.

22. Voyant selon l'une quelconque des revendications 12 à 21, dans lequel la batterie de secours (40) est en outre agencée pour fournir une alimentation électrique à la source de lumière lorsque la bobine reçoit une alimentation électrique.

23. Voyant selon l'une quelconque des revendications 12 à 21 comprenant en outre :
un dispositif d'acheminement, agencé pour alimenter la source de lumière à partir de la bobine, lorsque la bobine reçoit une alimentation électrique et pour alimenter la source de lumière à partir de la batterie de secours lorsque la bobine ne reçoit pas d'alimentation électrique.

24. Voyant selon la revendication 23, dans lequel le dispositif de commutation comprend :
une première diode (135), polarisée pour permettre qu'un courant s'écoule de la bobine vers la source de lumière lorsque la bobine reçoit une alimentation électrique, et
une deuxième diode (130), polarisée pour permettre qu'un courant s'écoule de la batterie de secours vers la source de lumière lorsque la bobine ne reçoit pas d'alimentation électrique.

25. Voyant selon l'une quelconque des revendications 12 à 24, dans lequel le boîtier de voyant forme une unité scellée étanche à l'eau.

26. Voyant selon la revendication 25, comprenant en outre :
une bague, agencée sur le boîtier de voyant, de sorte que le boîtier de voyant puisse être scellé sur un matériau isolant.

27. Voyant selon la revendication 25 ou la revendication 26, comprenant en outre :
une vanne (95) agencée pour permettre que du gaz sorte du boîtier de voyant et pour empêcher que de l'eau ne rentre dans le boîtier de voyant.

28. Système d'éclairage comprenant : un dispositif d'éclairage selon l'une quelconque des revendications 1 à 11 et un voyant selon l'une quelconque des revendications 12 à 27.

29. Système d'éclairage comprenant :
un voyant (20) comprenant un boîtier de voyant scellé et une source de lumière (60),
un élément de fixation de voyant comportant une première pièce de connecteur agencée pour supporter le voyant et lui fournir une alimentation,
un commutateur de voyant (80) pouvant être mis en oeuvre pour allumer et éteindre le voyant,
l'élément de fixation de voyant comprenant une entrée (10) connectée à une source d'alimentation et agencée pour fournir une alimentation de manière permanente à une sortie comprenant un enroulement primaire (15) et un émetteur (170) couplé au commutateur et pouvant être mis en oeuvre pour transmettre un signal de commutation en fonction de la position du commutateur,
le voyant comprenant en outre une deuxième pièce de connecteur comportant un enroulement secondaire (35) et un récepteur (70), le récepteur pouvant être mis en oeuvre pour recevoir le signal de commutation, une source de lumière (60) pouvant être connectée à l'enroulement secondaire pour être alimentée à partir de celui-ci, une batterie de secours (40) pouvant être connectée à la source de lumière afin de lui fournir une alimentation dans le cas d'une panne de l'alimentation électrique provenant de l'enroulement secondaire, et un contrôleur (50) pouvant être mis en oeuvre pour commander la délivrance d'alimentation à la source de lumière en réponse au signal de commutation reçu par le récepteur afin d'allumer et d'éteindre en conséquence le voyant,
où le moyen de fixation de voyant et le voyant sont agencés pour présenter à l'enroulement primaire et à l'enroulement secondaire un couplage inductif entre eux et pour présenter à l'émetteur et au récepteur une communication sans fil entre eux.
